(19) Europäisches Patentamt
European Patent Office
Office européen des brevets

(11) EP 4 459 774 A1

(12) EUROPEAN PATENT APPLICATION
published in accordance with Art. 153(4) EPC

(43) Date of publication:
**06.11.2024 Bulletin 2024/45**

(21) Application number: **22915700.3**

(22) Date of filing: **12.12.2022**

(51) International Patent Classification (IPC):
***H01M 50/403*** (2021.01) ***H01M 50/414*** (2021.01)
***H01M 50/42*** (2021.01) ***H01M 50/429*** (2021.01)
***H01M 50/443*** (2021.01) ***H01M 50/449*** (2021.01)

(52) Cooperative Patent Classification (CPC):
**H01M 50/403; H01M 50/414; H01M 50/42; H01M 50/429; H01M 50/443; H01M 50/449;**
Y02E 60/10

(86) International application number:
**PCT/JP2022/045744**

(87) International publication number:
**WO 2023/127476 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2021 JP 2021214613**

(71) Applicant: **Zeon Corporation**
**Tokyo 100-8246 (JP)**

(72) Inventors:
- **MAEDA, Kouichirou**
  **Tokyo 100-8246 (JP)**
- **MIYAZAKI, Akihiko**
  **Tokyo 100-8246 (JP)**

(74) Representative: **Maiwald GmbH**
**Elisenhof**
**Elisenstraße 3**
**80335 München (DE)**

# (54) SLURRY COMPOSITION FOR NON-AQUEOUS SECONDARY BATTERY FUNCTIONAL LAYER AND METHOD FOR PRODUCING SAME

(57) Provided is a slurry composition for a non-aqueous secondary battery functional layer that is capable of forming a functional layer that can inhibit heat generation in the event of an internal short circuit of a non-aqueous secondary battery and can also reduce internal resistance of the non-aqueous secondary battery. The slurry composition contains functional particles, a water-insoluble polymer, a water-soluble polymer, and water. The functional particles include foaming agent particles. The content of the water-insoluble polymer is not less than 0.01 parts by mass and not more than 20 parts by mass per 100 parts by mass of the functional particles, and the content of the water-soluble polymer is not less than 1 part by mass and not more than 10 parts by mass per 100 parts by mass of the functional particles. A value ($F_{sup}$) calculated by a specific formula (1) is 10 mass% or less.



Processed by Luminess, 75001 PARIS (FR)

## Description

TECHNICAL FIELD

The present disclosure relates to a slurry composition for a non-aqueous secondary battery functional layer and a method of producing the same.

BACKGROUND

Non-aqueous secondary batteries (hereinafter, also referred to as "secondary batteries") such as lithium ion secondary batteries have characteristics such as compact size, light weight, high energy density, and the ability to be repeatedly charged and discharged, and are used in a wide variety of applications.

A secondary battery typically includes electrodes (positive electrode and negative electrode) and a separator that isolates the positive electrode and the negative electrode from each other and prevents short-circuiting between the positive and negative electrodes. Conventionally, a separator in which a layer for imparting a specific function to a battery member, such as a porous membrane layer for improving heat resistance and strength or an adhesive layer for improving adhesiveness with an electrode (hereinafter, "functional layer for a non-aqueous secondary battery" or "functional layer" may be used as a general term for these layers), is provided on the surface of a separator substrate may be used as the separator.

Moreover, the functional layer may be formed by applying a slurry composition for a non-aqueous secondary battery functional layer (hereinafter, also referred to as a "slurry composition") that contains components such as a water-insoluble polymer onto a substrate such as a separator substrate and then drying a coating film on the substrate, for example.

In recent years, attempts have been made to improve slurry compositions used in the formation of functional layers in order to achieve further improvement of secondary battery performance.

As one specific example, Patent Literature (PTL) 1 discloses a slurry composition for a functional layer containing a binder that is a polymer including a specific functional group and a melamine compound that has a volume-average particle diameter within a specific range, and in which the proportion constituted by the melamine compound among the total of the binder and the melamine compound is within a specific range. The slurry composition for a functional layer in PTL 1 enables formation of a functional layer that can closely adhere strongly to a separator substrate and also enables enhancement of rate characteristics of a secondary battery.

CITATION LIST

Patent Literature

PTL 1: WO2020/040163A1

SUMMARY

(Technical Problem)

In a secondary battery, it is desirable to sufficiently inhibit heat generation in the event of an internal short circuit. In addition, it is desirable to reduce internal resistance in a secondary battery in order that excellent battery characteristics are displayed.

In other words, there has been demand for a new technique that sufficiently inhibits heat generation in the event of an internal short circuit of a secondary battery while also reducing internal resistance of the secondary battery.

Accordingly, an object of the present disclosure is to provide a slurry composition for a non-aqueous secondary battery functional layer that is capable of forming a functional layer that can inhibit heat generation in the event of an internal short circuit of a non-aqueous secondary battery and can also reduce internal resistance of the non-aqueous secondary battery, and also to provide a method of producing this slurry composition for a non-aqueous secondary battery functional layer.

(Solution to Problem)

The inventors conducted diligent investigation with the aim of solving the problems set forth above. The inventors discovered that heat generation in the event of an internal short circuit of a secondary battery can be inhibited while also reducing internal resistance of the non-aqueous secondary battery by using a slurry composition that contains functional

particles including foaming agent particles, a water-insoluble polymer, a water-soluble polymer, and water, in which quantitative ratios of the water-insoluble polymer and the water-soluble polymer relative to the functional particles are within specific ranges, and for which a ratio of the mass of dried material obtained through specific treatment of a supernatant obtained through settling of the slurry composition relative to the total mass of the water-insoluble polymer contained in the slurry composition is not more than a specific value. In this manner, the inventors completed the present disclosure.

Specifically, the present disclosure aims to advantageously solve the problems set forth above, and, according to the present disclosure, slurry compositions for a non-aqueous secondary battery functional layer according to the following [1] to [8] and methods of producing a slurry composition for a non-aqueous secondary battery functional layer according to the following [9] and [10] are provided.

[1] A slurry composition for a non-aqueous secondary battery functional layer comprising functional particles, a water-insoluble polymer, a water-soluble polymer, and water, wherein the functional particles include foaming agent particles, content of the water-insoluble polymer is not less than 0.01 parts by mass and not more than 20 parts by mass per 100 parts by mass of the functional particles, content of the water-soluble polymer is not less than 1 part by mass and not more than 10 parts by mass per 100 parts by mass of the functional particles, and a value $F_{sup}$ calculated by formula (1), shown below,

$$F_{sup} = 100 \times (W_1/W_0)\ [\text{mass\%}] \cdots (1)$$

is 10 mass% or less, given that $W_0$ (g) is total mass of the water-insoluble polymer contained in the slurry composition for a non-aqueous secondary battery functional layer and $W_1$ (g) is mass of dried material obtained when a supernatant obtained through 1 hour of settling of the slurry composition for a non-aqueous secondary battery functional layer at a temperature of 25°C is caused to coagulate using methanol and then resultant coagulated material is water washed and subsequently dried at a temperature of 60°C for 1 hour.

By using a slurry composition that contains functional particles including foaming agent particles, a water-insoluble polymer, a water-soluble polymer, and water, in which quantitative ratios of the water-insoluble polymer and the water-soluble polymer relative to the functional particles are within the specific ranges set forth above, and for which a value ($F_{sup}$) calculated by formula (1) set forth above is not more than the value set forth above in this manner, it is possible to produce a functional layer that is capable of forming a non-aqueous secondary battery having excellent inhibition of heat generation in the event of an internal short circuit and reduced internal resistance.

Note that when a polymer is said to be "water-insoluble" in the present disclosure, this means that when 0.5 g (in terms of solid content) of the polymer is dissolved in 100 g of water at a temperature of 25°C, the amount of insoluble content is 90 mass% or more.

Also note that when a polymer is said to be "water-soluble" in the present disclosure, this means that when 0.5 g (in terms of solid content) of the polymer is dissolved in 100 g of water at a temperature of 25°C, the amount of insoluble content is less than 1.0 mass%.

Moreover, "$F_{sup}$" referred to in the present disclosure can, more specifically, be calculated using a method described in the EXAMPLES section.

Furthermore, the term "functional particles" as used in the present disclosure is a concept comprised of non-conductive particles used for improving heat resistance and/or strength of a functional layer and foaming agent particles that decompose to form an incombustible gas through heat. In other words, the "water-insoluble polymer" referred to in the present disclosure is not included among the "functional particles" even supposing that the "water-insoluble polymer" has a particulate form.

[2] The slurry composition for a non-aqueous secondary battery functional layer according to the foregoing [1], wherein the content of the water-insoluble polymer is 10 parts by mass or less per 100 parts by mass of the functional particles.

When the quantitative ratio of the water-insoluble polymer relative to the functional particles is not more than the value set forth above in this manner, internal resistance of a secondary battery can be even further reduced.

[3] The slurry composition for a non-aqueous secondary battery functional layer according to the foregoing [1] or [2], wherein the water-soluble polymer has a thermal decomposition temperature of 130°C or higher.

By using a slurry composition in which the water-soluble polymer has a thermal decomposition temperature that is not lower than the value set forth above in this manner, it is possible to further inhibit heat generation in the event of an internal short circuit of a secondary battery.

Note that the "thermal decomposition temperature" of a water-soluble polymer referred to in the present disclosure can be measured by a method described in the EXAMPLES section.

[4] The slurry composition for a non-aqueous secondary battery functional layer according to any one of the foregoing [1] to [3], wherein the water-soluble polymer is selected from the group consisting of a cellulose derivative, an alginic acid compound, polyvinyl alcohol, and a polyacrylic acid compound.

By using a slurry composition that contains a water-soluble polymer selected from the group consisting of a cellulose derivative, an alginic acid compound, polyvinyl alcohol, and a polyacrylic acid compound in this manner, it is possible to further inhibit heat generation in the event of an internal short circuit of a secondary battery while also even further reducing internal resistance of the secondary battery.

[5] The slurry composition for a non-aqueous secondary battery functional layer according to any one of the foregoing [1] to [4], wherein the foaming agent particles have a thermal decomposition temperature of not lower than 150°C and not higher than 450°C.

When the thermal decomposition temperature of the foaming agent particles is within the range set forth above in this manner, heat generation in the event of an internal short circuit of a secondary battery can be further inhibited while also even further reducing internal resistance of the secondary battery.

Note that the "thermal decomposition temperature" of foaming agent particles referred to in the present disclosure can be measured by a method described in the EXAMPLES section.

[6] The slurry composition for a non-aqueous secondary battery functional layer according to any one of the foregoing [1] to [5], wherein an amount of foaming of the foaming agent particles at 400°C is 10 $cm^3/g$ or more as converted for 25°C and 1 atm.

When the amount of foaming of the foaming agent particles at 400°C is 10 $cm^3/g$ or more as converted for 25°C and 1 atm in this manner, heat generation in the event of an internal short circuit of a secondary battery can be further inhibited while also even further reducing internal resistance of the secondary battery.

Note that the "amount of foaming" of foaming agent particles at 400°C referred to in the present disclosure can be measured by a method described in the EXAMPLES section.

Also note that "1 atm" referred to in the present disclosure means 101,325 Pa.

[7] The slurry composition for a non-aqueous secondary battery functional layer according to any one of the foregoing [1] to [6], wherein the foaming agent particles are a melamine compound.

When the slurry composition contains a melamine compound as the foaming agent particles in this manner, heat generation in the event of an internal short circuit of a secondary battery can be further inhibited while also even further reducing internal resistance of the secondary battery.

[8] The slurry composition for a non-aqueous secondary battery functional layer according to the foregoing [7], wherein the melamine compound is melamine cyanurate.

When the slurry composition contains melamine cyanurate as the foaming agent particles in this manner, heat generation in the event of an internal short circuit of a secondary battery can be further inhibited while also even further reducing internal resistance of the secondary battery.

[9] A method of producing a slurry composition for a non-aqueous secondary battery functional layer that is a method of producing the slurry composition for a non-aqueous secondary battery functional layer according to any one of the foregoing [1] to [8], comprising removing an organic solvent from a dispersion liquid containing the functional particles, the water-insoluble polymer, the water-soluble polymer, water, and the organic solvent.

A method of producing a slurry composition for a non-aqueous secondary battery functional layer that includes removing an organic solvent from a dispersion liquid containing functional particles including foaming agent particles, a water-insoluble polymer, a water-soluble polymer, water, and the organic solvent in this manner enables good production of a presently disclosed slurry composition that is capable of forming a secondary battery having excellent inhibition of heat generation in the event of an internal short circuit and reduced internal resistance.

[10] The method of producing a slurry composition for a non-aqueous secondary battery functional layer according to the foregoing [9], further comprising, prior to the removing, either of the following (A) or (B):

(A) performing dispersing treatment of a composition containing the functional particles, the water-insoluble polymer, the water-soluble polymer, water, and the organic solvent to obtain the dispersion liquid;
(B) performing dispersing treatment of a composition containing the functional particles, the water-insoluble polymer, and the organic solvent to obtain a preliminary dispersion liquid and adding the water-soluble polymer and water to the preliminary dispersion liquid to obtain the dispersion liquid.

By using a slurry composition produced through the procedure (A) or (B) set forth above in this manner, it is possible to further inhibit heat generation in the event of an internal short circuit of a secondary battery while also even further reducing internal resistance of the secondary battery.

(Advantageous Effect)

According to the present disclosure, it is possible to provide a slurry composition for a non-aqueous secondary battery functional layer that is capable of forming a functional layer that can inhibit heat generation in the event of an internal short circuit of a non-aqueous secondary battery and can also reduce internal resistance of the non-aqueous secondary battery, and also to provide a method of producing this slurry composition for a non-aqueous secondary battery functional layer.

DETAILED DESCRIPTION

The following provides a detailed description of embodiments of the present disclosure.

A presently disclosed slurry composition for a non-aqueous secondary battery functional layer can be used in formation of a functional layer having a function such as reinforcement and/or adhesion inside of a non-aqueous secondary battery. Moreover, a presently disclosed method of producing a slurry composition for a non-aqueous secondary battery functional layer can be used for producing the presently disclosed slurry composition for a non-aqueous secondary battery functional layer.

(Slurry composition for non-aqueous secondary battery functional layer)

The presently disclosed slurry composition is a composition having functional particles, a water-insoluble polymer, and a water-soluble polymer dissolved and/or dispersed in water. The functional particles are required to include at least foaming agent particles. Note that the presently disclosed slurry composition may contain components other than the functional particles, the water-insoluble polymer, the water-soluble polymer, and water (i.e., other components).

Features of the presently disclosed slurry composition are that the content of the water-insoluble polymer is not less than 0.01 parts by mass and not more than 20 parts by mass per 100 parts by mass of the functional particles, the content of the water-soluble polymer is not less than 1 part by mass and not more than 10 parts by mass per 100 parts by mass of the functional particles, and $F_{sup}$ is 10 mass% or less.

As a result of the presently disclosed slurry composition containing functional particles that include at least foaming agent particles, a water-insoluble polymer, a water-soluble polymer, and water, the quantitative ratios of the water-insoluble polymer and the water-soluble polymer relative to the functional particles being within the ranges set forth above, and $F_{sup}$ calculated by formula (1) being not more than a specific value, it is possible to produce a functional layer that can inhibit heat generation in the event of an internal short circuit of a secondary battery and can also reduce internal resistance of the secondary battery by using this slurry composition. Although it is not certain why the effects described above are obtained by using the slurry composition set forth above in this manner, the reason for this is presumed to be as follows.

Firstly, the presently disclosed slurry composition contains foaming agent particles that decompose to form an incombustible gas through heat. These foaming agent particles have a function of cutting off electrical continuity between a positive electrode and a negative electrode in the event of an internal short circuit of a secondary battery by thermally decomposing to form an incombustible gas. Consequently, a secondary battery that includes a functional layer formed using the presently disclosed slurry composition has excellent inhibition of heat generation in the event of an internal short circuit.

Moreover, as a result of the content of the water-insoluble polymer that can function as a binder being within a specific range, the presently disclosed slurry composition can sufficiently ensure adhesiveness of a functional layer formed from the slurry composition while also not excessively increasing internal resistance of a secondary battery.

Next, the significance of $F_{sup}$ calculated by formula (1) being 10 mass% or less is described. $F_{sup}$ is a value that is determined by multiplying $W_1/W_0$ by 100 as indicated in formula (1). The denominator $W_0$ is the total mass (g) of the water-insoluble polymer contained in the slurry composition. On the other hand, the numerator $W_1$ is the mass (g) of dried material obtained when a supernatant obtained through settling of the slurry composition is caused to coagulate using methanol and then coagulated material is water washed and subsequently dried. Upon settling of the slurry composition, not only functional particles, but also water-insoluble polymer and water-soluble polymer that are attached to surfaces of the functional particles sediment together with the functional particles. On the other hand, the supernatant contains water-insoluble polymer and water-soluble polymer that were dispersed without being attached to the surfaces of functional particles such as foaming agent particles. Moreover, since water washing of coagulated material obtained through coagulation of the supernatant causes washing off of water-soluble polymer, the dried material that is obtained from the supernatant is thought to substantially correspond to water-insoluble polymer that was dispersed in the slurry composition without being attached to surfaces of functional particles. In other words, the mass $W_1$ (g) of the dried material can be treated as a value correlated with the mass of water-insoluble polymer that was dispersed in the slurry composition without being attached to surfaces of functional particles, and $F_{sup}$ determined by formula (1) can be said

to correspond to the proportion (mass%) constituted by the mass of water-insoluble polymer dispersed in the slurry composition without being attached to surfaces of functional particles among the total mass of the water-insoluble polymer contained in the slurry composition. Furthermore, through $F_{sup}$ calculated by formula (1) being 10 mass% or less, a sufficient amount of the water-insoluble polymer can be said to be attached to surfaces of the functional particles, and adhesiveness of a functional layer formed using the slurry composition can be improved. In addition, through $F_{sup}$ calculated by formula (1) being 10 mass% or less, adverse effects such as blocking of pores of a separator substrate by water-insoluble polymer that is dispersed without being attached to the functional particles can be reduced, and an increase of internal resistance of a secondary battery can be suppressed.

Moreover, the water-soluble polymer that is contained in the slurry composition has a function of imparting thermal stability to a functional layer formed using the slurry composition. When the quantitative ratio of the water-soluble polymer relative to the functional particles is too small, heat generation in the event of an internal short circuit of a secondary battery increases due to reduction of the thermal stability of a functional layer. On the other hand, when the quantitative ratio of the water-soluble polymer relative to the functional particles is too large, the viscosity of the slurry composition increases excessively, and coatability of the slurry composition decreases. Consequently, a uniform functional layer cannot be formed, thereby resulting in increased heat generation in the event of an internal short circuit of a secondary battery and increased internal resistance of the secondary battery. Problems such as described above do not arise with the presently disclosed slurry composition because the quantitative ratio of the water-soluble polymer relative to the functional particles is within a specific range.

Therefore, a secondary battery that includes a functional layer formed using the presently disclosed slurry composition is thought to have excellent inhibition of heat generation in the event of an internal short circuit and sufficiently reduced internal resistance.

<Functional particles>

The presently disclosed slurry composition contains at least foaming agent particles as the functional particles and may optionally contain non-conductive particles as the functional particles. In other words, the presently disclosed slurry composition may contain only foaming agent particles as the functional particles or may contain both foaming agent particles and non-conductive particles as the functional particles.

<<Foaming agent particles>>

The foaming agent particles that are contained in the presently disclosed slurry composition are not specifically limited so long as they are a compound that decomposes to form an incombustible gas through heat. However, from a viewpoint of further inhibiting heat generation in the event of an internal short circuit of a secondary battery while also even further reducing internal resistance of the secondary battery, compounds that form nitrogen as an incombustible gas through thermal decomposition are preferable, compounds including one or more selected from the group consisting of an amino group, an azo group, a hydrazino group, a hydrazo group, and a nitroso group, derivatives of these compounds, and salts of these compounds and derivatives thereof are more preferable, compounds including either or both of an amino group and an azo group, derivatives of these compounds, and salts of these compounds and derivatives thereof are even more preferable, and melamine compounds are particularly preferable.

Note that one type of foaming agent particles may be used individually, or two or more types of foaming agent particles may be used in combination in a freely selected ratio.

[Melamine compound]

Examples of melamine compounds that may be used include melamine, derivatives of melamine, and salts of melamine and derivatives thereof. The melamine or derivative of melamine may, for example, be a compound represented by the following formula (I).

[Chem. 1]

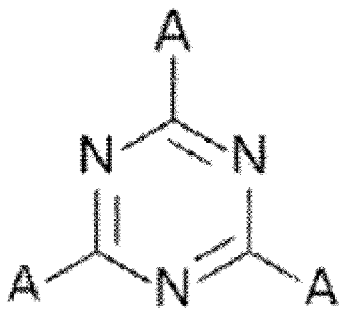

(I)

In formula (I), each A represents, independently of one another, a hydroxyl group or $NR^1R^2$ ($R^1$ and $R^2$ each represent, independently of each other, a hydrogen atom, a hydrocarbon group, or a hydroxyl group-containing hydrocarbon group; when more than one $R^1$ is present in formula (I), each $R^1$ may be the same or different; and when more than one $R^2$ is present in formula (I), each $R^2$ may be the same or different).

Note that when the hydrocarbon group and the hydroxyl group-containing hydrocarbon group of $R^1$ and $R^2$ include two or more carbon atoms, these groups may have one or more oxygen atoms (-O-) interposed between carbon atoms (however, when two or more oxygen atoms are interposed, these oxygen atoms are not adjacent to one another). The number of carbon atoms in the hydrocarbon group and the hydroxyl group-containing hydrocarbon group of $R^1$ and $R^2$ is not specifically limited but is preferably not less than 1 and not more than 5.

Moreover, examples of salts of melamine and derivatives of melamine include, but are not specifically limited to, sulfates and cyanurates.

From a viewpoint of further inhibiting heat generation in the event of an internal short circuit of a secondary battery while also even further reducing internal resistance of the secondary battery, the melamine compound is preferably melamine or a cyanuric acid salt of melamine (melamine cyanurate), and is more preferably melamine cyanurate.

Note that one melamine compound may be used individually, or two or more melamine compounds may be used in combination in a freely selected ratio.

[Other foaming agent particles]

Examples of foaming agent particles other than the above-described melamine compounds that may be used include azobisisobutyronitrile, p-toluenesulfonyl hydrazide, 5-methyl-1H-benzotriazole, oxybis(benzenesulfonyl hydrazide), trihydrazine triazine, azodicarbonamide, hydrazodicarbonamide, dinitrosopentamethylenetetramine, p-toluenesulfonyl semicarbazide, p,p'-oxybis(benzenesulfonyl semicarbazide), and sodium hydrogen carbonate.

Note that one type of other foaming agent particles may be used individually, or two or more types of other foaming agent particles may be used in combination in a freely selected ratio.

[Thermal decomposition temperature]

The thermal decomposition temperature of the foaming agent particles is preferably 150°C or higher, more preferably 200°C or higher, even more preferably 250°C or higher, and particularly preferably 300°C or higher, and is preferably 450°C or lower, more preferably 400°C or lower, and even more preferably 380°C or lower. When the thermal decomposition temperature of the foaming agent particles is 150°C or higher, heat generation in the event of an internal short circuit of a secondary battery can be further inhibited while also even further reducing internal resistance of the secondary battery because thermal decomposition of the foaming agent particles is suppressed. On the other hand, when the thermal decomposition temperature of the foaming agent particles is 450°C or lower, it becomes easier for the foaming agent particles to form an incombustible gas at an appropriate timing, and heat generation in the event of an internal short circuit of a secondary battery can be further inhibited.

Note that the thermal decomposition temperature of the foaming agent particles can be adjusted by altering the type of foaming agent particles, for example.

[Volume-average particle diameter]

The volume-average particle diameter of the foaming agent particles is preferably 200 nm or more, and is preferably 5,000 nm or less, more preferably 4,000 nm or less, and even more preferably 3,000 nm or less. When the

volume-average particle diameter of the foaming agent particles is 200 nm or more, a functional layer formed using the slurry composition and a separator substrate can be caused to closely adhere strongly. On the other hand, when the volume-average particle diameter of the foaming agent particles is 5,000 nm or less, a functional layer formed using the slurry composition and a separator substrate can be caused to closely adhere strongly, and internal resistance of a secondary battery can be even further reduced through a separator including the functional layer.

Note that the "volume-average particle diameter" of foaming agent particles referred to in the present disclosure can be measured by a method described in the EXAMPLES section.

[Amount of foaming]

The amount of foaming of the foaming agent particles at 400°C is preferably 10 $cm^3$/g or more, more preferably 15 $cm^3$/g or more, and even more preferably 20 $cm^3$/g or more as converted for 25°C and 1 atm. When the amount of foaming of the foaming agent particles at 400°C is 10 $cm^3$/g or more as converted for 25°C and 1 atm, heat generation in the event of an internal short circuit of a secondary battery can be further inhibited while also even further reducing internal resistance of the secondary battery. Moreover, the upper limit for the amount of foaming of the foaming agent particles at 400°C is not specifically limited and can be set as 500 $cm^3$/g or less, or as 350 $cm^3$/g or less, for example.

Note that the amount of foaming of the foaming agent particles can be adjusted by altering the type of foaming agent particles, for example.

<<Non-conductive particles>>

The functional particles can include non-conductive particles in addition to the above-described foaming agent particles with the aim of improving various characteristics such as heat resistance and strength of an obtained functional layer. Any known non-conductive particles that are used in secondary batteries can be used as the non-conductive particles without any specific limitations.

Specifically, although both inorganic fine particles and organic fine particles can be used as the non-conductive particles, inorganic fine particles are normally used. The material of the non-conductive particles is preferably an electrochemically stable material that is present stably in the environment of use of a secondary battery. Examples of the non-conductive particles that are preferable from such a viewpoint include particles of oxides such as aluminum oxide (alumina), hydrous aluminum oxide (boehmite), silicon oxide, magnesium oxide (magnesia), calcium oxide, titanium oxide (titania), $BaTiO_3$, ZrO, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clay such as talc and montmorillonite. These particles may be subjected to element substitution, surface treatment, solid solution treatment, and/or the like as necessary.

One of these types of non-conductive particles may be used individually, or two or more of these types of non-conductive particles may be used in combination. Although no specific limitations are placed on the glass-transition temperature of organic fine particles, the glass-transition temperature is normally 25°C or higher.

Note that the "glass-transition temperature" of organic fine particles referred to in the present disclosure can be measured in the same manner as the "glass-transition temperature" of a water-insoluble polymer described in the EXAMPLES section of the present specification.

In a case in which the slurry composition contains both foaming agent particles and non-conductive particles as the functional particles, the amount of the non-conductive particles in the slurry composition is preferably 100 parts by mass or less, more preferably 80 parts by mass or less, and even more preferably 60 parts by mass or less per 100 parts by mass of the foaming agent particles from a viewpoint of achieving expected characteristic improvement that is imparted to a functional layer through the non-conductive particles while also causing sufficiently strong close adherence between the functional layer and a separator substrate.

<Water-insoluble polymer>

The water-insoluble polymer is a component that imparts adhesiveness to a functional layer formed on a separator surface using the slurry composition. The water-insoluble polymer is in a dispersed state in water with a particulate form in the slurry composition.

«Type of water-insoluble polymer»

Any polymer can be used as the water-insoluble polymer without any specific limitations so long as it is a polymer that can impart adhesiveness to a functional layer formed on a separator surface. Suitable examples of the

water-insoluble polymer include conjugated diene polymers (random polymers and block polymers that include mainly an aliphatic conjugated diene monomer unit) and hydrogenated products thereof, aliphatic conjugated diene/aromatic monovinyl copolymers (random polymers and block polymers that include mainly an aliphatic conjugated diene monomer unit and an aromatic monovinyl monomer unit) and hydrogenated products thereof, acrylic polymers (polymers that include mainly a (meth)acrylic acid alkyl ester monomer unit), and acrylic acid/acrylamide copolymers (polymers that include mainly a (meth)acrylic acid monomer unit and a (meth)acrylamide monomer unit). Of these examples, a hydrogenated product of a conjugated diene polymer or an acrylic polymer is preferable, and a hydrogenated product of a conjugated diene polymer is more preferable.

Note that one water-insoluble polymer may be used individually, or two or more water-insoluble polymers may be used in combination in a freely selected ratio.

Also note that in the present disclosure, "(meth)acryl" indicates "acryl" and/or "methacryl".

Examples of aliphatic conjugated diene monomers that can form an aliphatic conjugated diene monomer unit include 1,3-butadiene, 2-methyl-1,3-butadiene (isoprene), and 2,3-dimethyl-1,3-butadiene. One of these aliphatic conjugated diene monomers may be used individually, or two or more of these aliphatic conjugated diene monomers may be used in combination in a freely selected ratio.

Examples of aromatic monovinyl monomers that can form an aromatic monovinyl monomer unit include styrene, α-methylstyrene, p-t-butylstyrene, butoxystyrene, vinyltoluene, chlorostyrene, and vinylnaphthalene. One of these aromatic monovinyl monomers may be used individually, or two or more of these aromatic monovinyl monomers may be used in combination in a freely selected ratio.

Examples of (meth)acrylic acid alkyl ester monomers that can form a (meth)acrylic acid alkyl ester monomer unit include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, stearyl methacrylate, and glycidyl methacrylate. One of these (meth)acrylic acid alkyl ester monomers may be used individually, or two or more of these (meth)acrylic acid alkyl ester monomers may be used in combination in a freely selected ratio.

Either or both of acrylic acid and methacrylic acid can be used as a (meth)acrylic acid monomer that can form a (meth)acrylic acid monomer unit.

Either or both of acrylamide and methacrylamide can be used as a (meth)acrylamide monomer that can form a (meth)acrylamide monomer unit.

The phrase "includes a monomer unit" as used in the present disclosure means that "a polymer obtained with the monomer includes a repeating unit derived from the monomer".

Furthermore, when a polymer is said to "include mainly" one type or a plurality of types of monomer units in the present disclosure, this means that "the proportional content of the one type of monomer unit or the total proportional content of the plurality of types of monomer units is more than 50 mass% when the amount of all repeating units included in the polymer is taken to be 100 mass%".

Note that the proportional content of each type of monomer unit (repeating unit) in a polymer referred to in the present disclosure can be measured by a nuclear magnetic resonance (NMR) method such as $^{1}$H-NMR or $^{13}$C-NMR.

«Functional group of water-insoluble polymer»

The water-insoluble polymer preferably includes a functional group. From a viewpoint of further inhibiting heat generation in the event of an internal short circuit of a secondary battery while also even further reducing internal resistance of the secondary battery, a carboxy group, a hydroxyl group, an amino group, an epoxy group, an oxazoline group, a sulfo group, a nitrile group, an ester group, and an amide group (hereinafter, these functional groups are also referred to collectively as "prescribed functional groups") are preferable as functional groups included in the water-insoluble polymer, and a carboxy group, an epoxy group, and an ester group are more preferable as functional groups included in the water-insoluble polymer.

Note that the water-insoluble polymer may include one type of prescribed functional group described above or may include two or more types of prescribed functional groups described above.

No specific limitations are placed on the method by which a prescribed functional group is introduced into the water-insoluble polymer. For example, it is preferable that a polymerization reaction is performed using a monomer that includes a prescribed functional group (prescribed functional group-containing monomer) so as to obtain a water-insoluble polymer that includes a prescribed functional group-containing monomer unit. The prescribed functional group-containing monomer can be any known example thereof without any specific limitations.

For example, examples of carboxy group-containing monomers include the previously described (meth)acrylic acid monomers and maleic acid.

Examples of epoxy group-containing monomers include unsaturated glycidyl ethers such as vinyl glycidyl ether, allyl glycidyl ether, butenyl glycidyl ether, and o-allylphenyl glycidyl ether; monoepoxides of dienes and polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl 4-heptenoate, glycidyl sorbate, glycidyl linoleate, glycidyl 4-methyl-3-pentenoate, glycidyl ester of 3-cyclohexenecarboxylic acid, and glycidyl ester of 4-methyl-3-cyclohexenecarboxylic acid.

Examples of ester group-containing monomers include the previously described (meth)acrylic acid alkyl ester monomers.

Note that one prescribed functional group-containing monomer may be used individually, or two or more prescribed functional group-containing monomers may be used in combination in a freely selected ratio.

[Other repeating units]

The water-insoluble polymer may include repeating units derived from monomers other than the above-described monomers (i.e., other repeating units). Examples of such other repeating units include, but are not specifically limited to, a cross-linkable monomer unit.

Examples of cross-linkable monomers that can form a cross-linkable monomer unit include polyfunctional (meth)acrylates such as allyl (meth)acrylate, ethylene di(meth)acrylate, ethylene glycol di(meth)acrylate, diethylene glycol di(meth)acrylate, triethylene glycol di(meth)acrylate, tetraethylene glycol di(meth)acrylate, and trimethylolpropane tri(meth)acrylate.

Note that in the present disclosure, "(meth)acrylate" indicates "acrylate" and/or "methacrylate".

<<Production method of water-insoluble polymer>>

No specific limitations are placed on the method by which the water-insoluble polymer is produced. For example, the water-insoluble polymer may be produced by polymerizing a monomer composition containing the monomers described above in a solvent. Note that the proportional content of each monomer in the monomer composition can be set in accordance with the desired proportional content of each monomer unit (repeating unit) in the water-insoluble polymer.

The polymerization method is not specifically limited and may, for example, be any of solution polymerization, suspension polymerization, bulk polymerization, and emulsion polymerization. Also, the polymerization reaction can be any of ionic polymerization, radical polymerization, living radical polymerization, various types of condensation polymerization, addition polymerization, and so forth. A known emulsifier and/or polymerization initiator can be used in the polymerization as necessary.

Note that water-solubility/water-insolubility of a polymer is determined through the amount of insoluble content when the polymer is dissolved in water as previously described. The amount of insoluble content upon dissolution in water can be adjusted by altering the types and amounts of monomers used in production of the polymer, the weight-average molecular weight of the polymer, and so forth.

[Glass-transition temperature]

The glass-transition temperature of the water-insoluble polymer is preferably lower than 25°C, and more preferably 0°C or lower. When the glass-transition temperature of the water-insoluble polymer is lower than 25°C, a functional layer formed using the slurry composition and a separator substrate can be caused to closely adhere strongly. Note that the lower limit for the glass-transition temperature of the water-insoluble polymer is not specifically limited and can be set as -100°C or higher, or can be set as -50°C or higher, for example.

Also note that the "glass-transition temperature" of a water-insoluble polymer referred to in the present disclosure can be measured by a method described in the EXAMPLES section.

[Solubility in organic solvent]

The water-insoluble polymer is preferably soluble in an organic solvent having a boiling point of 120°C or lower. The organic solvent having a boiling point of 120°C or lower may be acetonitrile (boiling point: 82°C), tetrahydrofuran (boiling point: 66°C), acetone (boiling point: 56.5°C), methyl ethyl ketone (boiling point: 79.64°C), ethylenediamine (boiling point: 117°C), toluene (boiling point: 110.63°C), cyclopentyl methyl ether (boiling point: 106°C), isopropyl alcohol (82.4°C), or the like, for example.

Note that when a water-insoluble polymer is said to be "soluble" in an organic solvent in the present disclosure, this means that when 0.5 g of the water-insoluble polymer is dissolved in 100 g of the organic solvent at a temperature of 25°C, the amount of organic solvent-insoluble content is less than 50 mass%.

Also note that the "amount of organic solvent-insoluble content" can be measured by a method described in the EXAMPLES section. The amount of organic solvent-insoluble content can be adjusted by altering the types and amounts of monomers used in production of the polymer, the weight-average molecular weight of the polymer, and so forth. For example, the amount of organic solvent-insoluble content can be increased by increasing the amount of an epoxy group-containing monomer and/or cross-linkable monomer used in production of the polymer.

<<Quantitative ratio of functional particles and water-insoluble polymer>>

The content of the water-insoluble polymer in the slurry composition is required to be not less than 0.01 parts by mass and not more than 20 parts by mass per 100 parts by mass of the functional particles, is preferably 0.05 parts by mass or more, and more preferably 0.07 parts by mass or more per 100 parts by mass of the functional particles, and is preferably 10 parts by mass or less, more preferably 8 parts by mass or less, even more preferably 6 parts by mass or less, further preferably 5 parts by mass or less, and particularly preferably 4 parts by mass or less per 100 parts by mass of the functional particles. In a situation in which the content of the water-insoluble polymer in the slurry composition is less than 0.01 parts by mass per 100 parts by mass of the functional particles, shedding of the functional particles from a functional layer formed on a separator substrate is more likely to occur. This results in an increase of heat generation in the event of an internal short circuit of a secondary battery, and also results in an increase of internal resistance and deterioration of battery characteristics of the secondary battery. On the other hand, in a situation in which the content of the water-insoluble polymer in the slurry composition is more than 20 parts by mass per 100 parts by mass of the functional particles, internal resistance of an obtained secondary battery increases, and battery characteristics of the secondary battery deteriorate. Moreover, when the content of the water-insoluble polymer in the slurry composition is 10 parts by mass or less per 100 parts by mass of the functional particles, internal resistance of a secondary battery can be even further reduced.

<Water-soluble polymer>

The water-soluble polymer can function as a viscosity modifier for modifying the viscosity of the presently disclosed slurry composition and can also function as a component for inhibiting heat generation in the event of an internal short circuit of a non-aqueous secondary battery.

«Type of water-soluble polymer»

Although no specific limitations are placed on the water-soluble polymer, from a viewpoint of further inhibiting heat generation in the event of an internal short circuit of a secondary battery while also even further reducing internal resistance of the secondary battery, the water-soluble polymer is preferably a cellulose derivative, an alginic acid compound such as alginic acid or a salt thereof (sodium salt, etc.), a polyacrylic acid compound such as polyacrylic acid or a salt thereof (sodium salt, etc.), or polyvinyl alcohol, more preferably a cellulose derivative or an alginic acid compound, and even more preferably a cellulose derivative.

Note that one water-soluble polymer may be used individually, or two or more water-soluble polymers may be used in combination in a freely selected ratio.

Cellulose derivatives can be classified as non-ionic, anionic, and cationic.

Examples of non-ionic cellulose derivatives include alkyl celluloses such as methyl cellulose, methyl ethyl cellulose, ethyl cellulose, and microcrystalline cellulose; and hydroxyalkyl celluloses such as hydroxyethyl cellulose, hydroxybutyl methyl cellulose, hydroxypropyl cellulose, hydroxypropyl methyl cellulose, hydroxyethyl methyl cellulose, hydroxypropyl methyl cellulose stearoxy ether, carboxymethyl hydroxyethyl cellulose, alkyl hydroxyethyl cellulose, and nonoxynyl hydroxyethyl cellulose.

Examples of anionic cellulose derivatives include substitution products obtained by substitution of the non-ionic cellulose derivatives described above with various derivative groups and salts (sodium salts, ammonium salts, etc.) of these substitution products. Specific examples include sodium cellulose sulfate, carboxymethyl cellulose (CMC), and salts of CMC.

Examples of cationic cellulose derivatives include low-nitrogen hydroxyethyl cellulose dimethyl diallylammonium chloride (polyquaternium-4), O-[2-hydroxy-3-(trimethylammonio)propyl]hydroxyethyl cellulose chloride (polyquaternium-10), and O-[2-hydroxy-3-(lauryldimethylammonio)propyl]hydroxyethyl cellulose chloride (polyquaternium-24).

Of the examples given above, carboxymethyl cellulose and carboxymethyl cellulose salts are preferable from a viewpoint of further inhibiting heat generation in the event of an internal short circuit of a secondary battery while also

even further reducing internal resistance of the secondary battery.

[Thermal decomposition temperature]

The thermal decomposition temperature of the water-soluble polymer is preferably 130°C or higher, more preferably 140°C or higher, even more preferably 150°C or higher, and particularly preferably 160°C or higher. When the thermal decomposition temperature of the water-soluble polymer is 130°C or higher, heat generation in the event of an internal short circuit of a secondary battery can be further inhibited. Note that the upper limit for the thermal decomposition temperature of the water-soluble polymer is not specifically limited and can be set as 350°C or lower, or can be set as 300°C or lower, for example.

Also note that the thermal decomposition temperature of the water-soluble polymer can be adjusted by altering the type of water-soluble polymer, for example.

<<Quantitative ratio of functional particles and water-soluble polymer>>

The content of the water-soluble polymer in the slurry composition is required to be not less than 1 part by mass and not more than 10 parts by mass per 100 parts by mass of the functional particles, is preferably 1.5 parts by mass or more, more preferably 2 parts by mass or more, and even more preferably 2.5 parts by mass or more per 100 parts by mass of the functional particles, and is preferably 8 parts by mass or less, more preferably 7 parts by mass or less, even more preferably 6 parts by mass or less, and particularly preferably 5 parts by mass or less per 100 parts by mass of the functional particles. In a situation in which the content of the water-soluble polymer in the slurry composition is less than 1 part by mass per 100 parts by mass of the functional particles, heat generation in the event of an internal short circuit of a secondary battery increases due to reduction of functional layer thermal stability. On the other hand, in a situation in which the content of the water-soluble polymer in the slurry composition is more than 10 parts by mass per 100 parts by mass of the functional particles, viscosity of the slurry composition increases excessively and coatability of the slurry composition decreases. As a consequence, it is not possible to form a uniform functional layer, and heat generation in the event of an internal short circuit of a secondary battery increases.

«Water-insoluble polymer/water-soluble polymer (mass ratio)»

A mass ratio of the content of the water-insoluble polymer relative to the content of the water-soluble polymer (water-insoluble polymer/water-soluble polymer (mass ratio)) in the slurry composition is preferably 0.01 or more, more preferably 0.05 or more, and even more preferably 0.10 or more, and is preferably 5.0 or less, more preferably 2.5 or less, and even more preferably 1.5 or less. When water-insoluble polymer/water-soluble polymer (mass ratio) is 0.01 or more, heat generation in the event of an internal short circuit of a secondary battery can be further inhibited. On the other hand, when water-insoluble polymer/water-soluble polymer (mass ratio) is 5.0 or less, heat generation in the event of an internal short circuit of a secondary battery can be further inhibited while also even further reducing internal resistance of the secondary battery.

<Solvent>

The solvent of the presently disclosed slurry composition is not specifically limited so long as it includes water. For example, the presently disclosed slurry composition may contain only water as a solvent or may contain a mixture of water and an organic solvent as a solvent. However, from a viewpoint of further inhibiting heat generation in the event of an internal short circuit of a secondary battery while also even further reducing internal resistance of the secondary battery, it is preferable that the solvent only includes water (i.e., that the presently disclosed slurry composition does not contain an organic solvent).

Note that the presently disclosed slurry composition may contain one type of organic solvent or may contain two or more types of organic solvents.

<Other components>

In addition to the functional particles (foaming agent particles and non-conductive particles), water-insoluble polymer, water-soluble polymer, and solvent described above, the presently disclosed slurry composition may optionally contain known additives that can be added to a functional layer, such as other polymers having different chemical compositions and properties from the water-insoluble polymer, water-soluble polymer, and non-conductive particles (organic fine particles) described above, conductive materials, wetting agents, viscosity modifiers, and additives for electrolyte solution.

One other component may be used individually, or two or more other components may be used in combination in a freely selected ratio.

The presently disclosed slurry composition preferably further contains a wetting agent. When the slurry composition further contains a wetting agent, heat generation in the event of an internal short circuit of a secondary battery can be further inhibited while also even further reducing internal resistance of the secondary battery.

Examples of wetting agents that can optionally be contained in the presently disclosed slurry composition include, but are not specifically limited to, polyether-based surfactants, sulfonic acid-based surfactants, fluorinated surfactants, silicon-based surfactants, and acetylene-based surfactants.

Specific examples of polyether-based surfactants include NOPTECHS ED052 (product name) produced by San Nopco Limited.

Specific examples of sulfonic acid-based surfactants include dioctylsulfosuccinic acid and salts thereof.

Specific examples of fluorinated surfactants include the MEGAFACE® series (MEGAFACE is a registered trademark in Japan, other countries, or both) produced by DIC Corporation, the Ftergent® series (Ftergent is a registered trademark in Japan, other countries, or both) produced by Neos Company Limited, and the Surflon® series (Surflon is a registered trademark in Japan, other countries, or both) produced by AGC.

Specific examples of silicon-based surfactants include dimethylpolysiloxane.

Specific examples of acetylene-based surfactants include the Surfynol® series (Surfynol is a registered trademark in Japan, other countries, or both) and the Dynol series produced by Air Products and Chemicals Inc.

Of these examples, it is preferable to use a polyether-based surfactant as a wetting agent from a viewpoint of improving stability of the slurry composition and even further reducing internal resistance of a secondary battery.

Note that one of these wetting agents may be used individually, or two or more of these wetting agents may be used in combination in a freely selected ratio.

The content of the above-described wetting agent in the slurry composition is preferably 0.1 parts by mass or more, more preferably 0.5 parts by mass or more, and even more preferably 1 part by mass or more per 100 parts by mass of the functional particles, and is preferably 3 parts by mass or less, more preferably 2.5 parts by mass or less, and even more preferably 2 parts by mass or less per 100 parts by mass of the functional particles. By setting the content of the wetting agent as 0.1 parts by mass or more per 100 parts by mass of the functional particles, wettability of the slurry composition with respect to a substrate improves, the occurrence of cissing is inhibited, and thus coatability of the slurry composition can be improved. As a consequence, heat generation in the event of an internal short circuit of a secondary battery can be further inhibited. Moreover, by setting the content of the wetting agent as 3 parts by mass or less per 100 parts by mass of the functional particles, close adherence between a functional layer and a substrate can be improved. Moreover, internal resistance of a secondary battery can be even further reduced.

[$F_{sup}$]

The value of $F_{sup}$ for the presently disclosed slurry composition is required to be 10 mass% or less, and is preferably 8 mass% or less, more preferably 6 mass% or less, even more preferably 5 mass% or less, further preferably 4 mass% or less, and particularly preferably 2 mass% or less. In a situation in which the value of $F_{sup}$ is more than 10 mass%, adverse effects such as the blocking of pores of a separator substrate by the water-insoluble polymer arise in a functional layer formed using the slurry composition, and battery characteristics of a secondary battery deteriorate. Moreover, it becomes necessary to increase the amount of the water-insoluble polymer in order to achieve sufficient binding capacity, thus resulting in increased internal resistance of a secondary battery. Note that the lower limit for the value of $F_{sup}$ is not specifically limited and can be set as 0.1 mass% or more, or can be set as 0.5 mass% or more, for example.

Moreover, the value of $F_{sup}$ can be adjusted by altering the production method of the slurry composition, for example. Specifically, the value of $F_{sup}$ can be reduced by producing the slurry composition through a subsequently described organic solvent removal step.

The solid content concentration of the presently disclosed slurry composition is preferably 5 mass% or more, and more preferably 10 mass% or more, and is preferably 40 mass% or less, and more preferably 30 mass% or less. When the solid content concentration is within any of the ranges set forth above, the value of $F_{sup}$ calculated by formula (1) can be reduced, and the expected effects can be even better displayed.

(Method of producing slurry composition for non-aqueous secondary battery functional layer)

The presently disclosed slurry composition can, for example, be produced by the presently disclosed method of producing a slurry composition. The presently disclosed method of producing a slurry composition is a method of producing the presently disclosed slurry composition set forth above that at least includes removing an organic solvent from a dispersion liquid containing the above-described functional particles, water-insoluble polymer, and water-soluble

polymer, water, and the organic solvent (organic solvent removal step).

The presently disclosed method of producing a slurry composition preferably further includes, prior to the organic solvent removal step described above, either of the following (A) or (B):

(A) performing dispersing treatment of a composition containing the functional particles, the water-insoluble polymer, the water-soluble polymer, water, and the organic solvent to obtain the dispersion liquid (dispersing step);
(B) performing dispersing treatment of a composition containing the functional particles, the water-insoluble polymer, and the organic solvent to obtain a preliminary dispersion liquid (preliminary dispersing step) and adding the water-soluble polymer and water to the preliminary dispersion liquid to obtain the dispersion liquid (addition step).

By using a slurry composition produced through the above-described procedure (A) or (B) prior to the organic solvent removal step, it is possible to further inhibit heat generation in the event of an internal short circuit of a secondary battery while also even further reducing internal resistance of the secondary battery.

Note that the presently disclosed method of producing a slurry composition may include steps other than the organic solvent removal step, the dispersing step, the preliminary dispersing step, and the addition step described above (i.e., may include other steps).

<Organic solvent removal step>

In the organic solvent removal step, an organic solvent is removed from a dispersion liquid containing the above-described functional particles, water-insoluble polymer, and water-soluble polymer, water, and the organic solvent. Implementing the organic solvent removal step enables good production of a slurry composition having a value for $F_{sup}$ that is not more than a specific value, presumably due to the water-insoluble polymer attaching to the surfaces of the functional particles and sedimenting together with the functional particles. Consequently, a slurry composition that is capable of forming a functional layer that can inhibit heat generation in the event of an internal short circuit of a non-aqueous secondary battery and can also reduce internal resistance of the non-aqueous secondary battery can be obtained well.

Note that the dispersion liquid that is subjected to the organic solvent removal step may contain components other than the functional particles, the water-insoluble polymer, the water-soluble polymer, water, and the organic solvent (i.e., other components). Examples of such other components include those previously described in the "Slurry composition for non-aqueous secondary battery functional layer" section.

<<Organic solvent>>

The organic solvent that is contained in the dispersion liquid is not specifically limited so long as it is an organic solvent in which the water-insoluble polymer in the dispersion liquid is soluble. However, from a viewpoint of preventing thermal decomposition of components (foaming agent particles, water-soluble polymer, etc.) contained in the dispersion liquid in the organic solvent removal step, it is preferable that the organic solvent contained in the dispersion liquid is an organic solvent having a boiling point of 120°C or lower. Examples of organic solvents having a boiling point of 120°C or lower include those previously described in the "Slurry composition for non-aqueous secondary battery functional layer" section. Of these organic solvents, toluene is preferable.

Note that one organic solvent may be used individually, or two or more organic solvents may be used in combination in a freely selected ratio.

«Removal method of organic solvent»

No specific limitations are placed on the method by which the organic solvent is removed from the dispersion liquid so long as the desired effects according to the present disclosure are obtained. For example, removal of the organic solvent can be performed by a known drying method such as hot-air drying, natural drying, reduced pressure drying, freeze drying, or spray drying. Of these methods, reduced pressure drying is preferable from a viewpoint of inhibiting decomposition of components (functional particles, water-insoluble polymer, water-soluble polymer, and other components) in the dispersion liquid and efficiently removing the organic solvent in a short time.

The reduced pressure drying can be performed using a rotary evaporator. Various conditions (bath temperature, rotation speed, reached degree of decompression, etc.) in the reduced pressure drying using a rotary evaporator can be set as appropriate depending on the type of organic solvent that is used, for example.

<Dispersing step>

In the dispersing step of procedure (A), a composition that contains the foaming agent particles, the water-insoluble polymer, the water-soluble polymer, water, and the organic solvent and that optionally contains other components is subjected to dispersing treatment to produce a dispersion liquid. The dispersion liquid that is obtained in this manner can then be subjected to the organic solvent removal step. Note that examples of other components in the dispersing step include the other components that were previously described in the "Organic solvent removal step" section.

No specific limitations are placed on the method of dispersing treatment in the dispersing step so long as it is a method that enables dissolution and/or dispersion of the above-described functional particles, water-insoluble polymer, water-soluble polymer, and other components in a mixture of the organic solvent and water. Specifically, a known mixer such as a ball mill, a sand mill, a bead mill, a pigment disperser, a grinding machine, an ultrasonic disperser, a homogenizer, a planetary mixer, or a FILMIX can be used.

<Preliminary dispersing step>

In the preliminary dispersing step of procedure (B), a composition that contains the foaming agent particles, the water-insoluble polymer, and the organic solvent and that optionally contains other components is subjected to dispersing treatment to produce a preliminary dispersion liquid. Note that examples of other components in the preliminary dispersing step include the other components that were previously described in the "Organic solvent removal step" section.

No specific limitations are placed on the method of dispersing treatment in the preliminary dispersing step so long as it is a method that enables dissolution and/or dispersion of the functional particles, the water-insoluble polymer, and other components in the organic solvent. Specifically, any of the various mixers that are useable in the above-described dispersing step can be used.

<Addition step>

In the addition step of procedure (B), the water-soluble polymer and water, and optionally other components, are added to the preliminary dispersion liquid obtained through the above-described preliminary dispersing step to produce a dispersion liquid. The dispersion liquid obtained in this manner can then be subjected to the organic solvent removal step. Note that examples of other components in the addition step include the other components that were previously described in the "Organic solvent removal step" section.

<<Other steps>>

Examples of other steps include, but are not specifically limited to, a step (supplemental addition step) of adding other components after the above-described organic solvent removal step and a step (post-dispersing step) of performing dispersing treatment after the above-described organic solvent removal step or supplemental addition step. Note that examples of other components in the supplemental addition step include the other components that were previously described in the "Organic solvent removal step" section. Moreover, the post-dispersing step can be implemented in the same manner as the dispersing step and the preliminary dispersing step.

(Functional layer-equipped separator for non-aqueous secondary battery)

A separator that includes a functional layer on a separator substrate (hereinafter, also referred to simply as a "functional layer-equipped separator") can be provided using the presently disclosed slurry composition set forth above. The functional layer-equipped separator includes a separator substrate and a functional layer, wherein the functional layer is formed of dried material of the presently disclosed slurry composition set forth above. As a result of the functional layer in the functional layer-equipped separator being formed from the presently disclosed slurry composition, the functional layer-equipped separator makes it possible to inhibit heat generation in the event of an internal short circuit of a secondary battery and also to reduce internal resistance of the secondary battery. Note that the functional layer-equipped separator may have functional layers formed at both sides of the separator substrate or may have a functional layer formed at just one side of the separator substrate.

<Separator substrate>

The separator substrate is not specifically limited and may be a known separator substrate such as an organic

separator substrate. The organic separator substrate is a porous member that is formed of an organic material. Examples of the organic separator substrate that are preferable from a viewpoint of enhancing cycle characteristics of a secondary battery while also even further reducing internal resistance of the secondary battery include a microporous membrane or non-woven fabric that contains a polyolefin resin such as polyethylene or polypropylene, a polyethylene terephthalate (PET) resin, an aromatic polyamide resin, or the like.

<Functional layer>

The functional layer is formed of dried material of the presently disclosed slurry composition as previously described. In other words, the functional layer that is included in the functional layer-equipped separator normally contains at least foaming agent particles, a water-insoluble polymer, and a water-soluble polymer and optionally contains other components such as non-conductive particles and a wetting agent. Note that components contained in the functional layer are components that were contained in the presently disclosed slurry composition set forth above, and thus the preferred ratio of these components is the same as the preferred ratio of the components in presently disclosed slurry composition. Also note that in a case in which a polymer such as the water-insoluble polymer is a polymer that includes a cross-linkable functional group (for example, an epoxy group or an oxazoline group), this polymer may be cross-linked during drying of the slurry composition or during heat treatment that is optionally performed after drying (i.e., the functional layer may contain a cross-linked product of the previously described water-insoluble polymer).

Moreover, although the functional layer, which is dried material of the slurry composition, may contain a solvent such as water originating from the slurry composition, the solvent content in the functional layer is preferably 3 mass% or less, more preferably 1 mass% or less, even more preferably 0.1 mass% or less, and particularly preferably 0 mass% (below the limit of detection) from a viewpoint of ensuring battery characteristics (rate characteristics, etc.) of a secondary battery.

<Production method of functional layer-equipped separator for non-aqueous secondary battery>

Examples of methods by which the functional layer-equipped separator may be formed include the following methods.

(1) A method in which the presently disclosed slurry composition is supplied to a surface of the separator substrate and is then dried

(2) A method in which the presently disclosed slurry composition is supplied onto a releasable substrate and is dried to produce a functional layer that is then transferred onto the surface of the separator substrate

Of these methods, method (1) is particularly preferable since it allows simple control of the thickness of the functional layer. In more detail, method (1) includes a step of supplying the slurry composition onto the separator substrate (supply step) and a step of drying the slurry composition that has been applied onto the separator substrate to form a functional layer (drying step).

«Supply step»

Examples of methods by which the slurry composition may be supplied onto the separator substrate in the supply step include a method in which the slurry composition is applied onto the surface of the separator substrate and a method in which the separator substrate is immersed in the slurry composition. Specific examples of these methods include, but are not specifically limited to, doctor blading, reverse roll coating, direct roll coating, gravure coating, extrusion coating, brush coating, dip coating, spray coating, and vacuum impregnation.

It is preferable to use dip coating, spray coating, vacuum impregnation, or gravure coating in order to cause impregnation of an inner part of the separator substrate with the slurry composition.

<<Drying step>>

Any commonly known method can be adopted without any specific limitations as the method by which the slurry composition on the separator substrate is dried in the drying step. Examples of drying methods that may be used include drying by warm, hot, or low-humidity air, drying in a vacuum, and drying through irradiation with infrared light, electron beams, or the like.

(Non-aqueous secondary battery)

A non-aqueous secondary battery can be produced using the functional layer-equipped separator set forth above, a positive electrode, a negative electrode, and an electrolyte solution. Such a secondary battery has excellent inhibition of heat generation in the event of an internal short circuit and reduced internal resistance as a result of including a functional layer-equipped separator that has been formed using the presently disclosed slurry composition set forth above.

<Positive electrode and negative electrode>

Known positive electrodes and negative electrodes can be used as the positive electrode and the negative electrode without any specific limitations.

<Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferred as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

<Production method of non-aqueous secondary battery>

The non-aqueous secondary battery can be produced by, for example, stacking the positive electrode and the negative electrode with the functional layer-equipped separator in-between, performing rolling, folding, or the like of the resultant laminate, as necessary, in accordance with the battery shape, placing the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer. In the examples and comparative examples, the following methods were used to evaluate the thermal decomposition temperature of foaming agent particles and a water-soluble polymer, the volume-average particle diameter and amount of foaming of foaming agent particles, the glass-transition temperature of a water-insoluble polymer, the amount of organic solvent-insoluble content, $F_{sup}$, the dusting and Gurley value of a functional layer-equipped separator, and the IV resistance and inhibition of heat generation in the event of an internal short circuit

of a secondary battery.

<Thermal decomposition temperature of foaming agent particles>

The weight of foaming agent particles was measured while the foaming agent particles were heated from 25°C to 500°C at a heating rate of 10°C/min under a nitrogen atmosphere in thermogravimetric analysis using a thermogravimetry/differential thermal analyzer (produced by Hitachi High-Tech Science Corporation; product name: TG/DTA7200). The temperature (30% weight loss temperature) at which the measured weight reached 70% of the weight at the start of measurement (25°C) was taken to be the thermal decomposition temperature of the foaming agent particles.

<Thermal decomposition temperature of water-soluble polymer>

The weight of a water-soluble polymer was measured while the water-soluble polymer was heated from 25°C to 500°C at a heating rate of 10°C/min under a nitrogen atmosphere in thermogravimetric analysis using a thermogravimetry/differential thermal analyzer (produced by Hitachi High-Tech Science Corporation; product name: TG/DTA7200). The temperature (30% weight loss temperature) at which the measured weight reached 70% of the weight at the start of measurement (25°C) was taken to be the thermal decomposition temperature of the water-soluble polymer.

<Volume-average particle diameter of foaming agent particles>

The volume-average particle diameter of foaming agent particles was measured as follows by laser diffraction. First, a produced water dispersion containing the foaming agent particles was adjusted to a solid content concentration of 0.1 mass% to prepare a measurement sample. In a particle diameter distribution (by volume) measured using a laser diffraction particle size analyzer (produced by Beckman Coulter, Inc.; product name: LS-13 320), the particle diameter D50 at which cumulative volume calculated from a small diameter end of the distribution reached 50% was taken to be the volume-average particle diameter.

<Amount of foaming of foaming agent particles>

Foaming agent particles were sealed in a Hastelloy vessel and were introduced into an ARC measurement device (produced by Netzsch). First, heating was performed to an initial temperature of 40°C. Thereafter, stepwise heating was performed in increments of 5°C while confirming that heat generation was not detected so as to raise the temperature to 400°C. The pressure at a point corresponding to 400°C was measured, and the amount of foaming converted for 25°C and 1 atm was calculated from a relationship between the charged amount of sample and the temperature through the following formula.

$$\text{Amount of foaming of foaming agent particles at } 400°\text{C } (\text{cm}^3/\text{g, value converted for } 25°\text{C and 1 atm}) = \{\text{Pressure at } 400°\text{C (atm)} \times \text{Void volume in vessel } (\text{cm}^3) \times (298/673)\}/\text{Weight of sealed foaming agent particles (g)}$$

<Glass-transition temperature of water-insoluble polymer>

First, a produced water dispersion containing a water-insoluble polymer was dried at a temperature of 25°C for 48 hours, and the resultant powder was taken to be a measurement sample.

The measurement sample was weighed into an aluminum pan in an amount of 10 mg and was then measured by a differential scanning calorimeter (produced by SII NanoTechnology Inc.; product name: EXSTAR DSC6220) under conditions prescribed in JIS Z8703 with a measurement temperature range of -100°C to 200°C and a heating rate of 20°C/min to obtain a differential scanning calorimetry (DSC) curve. An empty aluminum pan was used as a reference. A temperature at which a derivative signal (DDSC) exhibited a peak in the heating process was determined as the glass-transition temperature (°C).

<Amount of organic solvent-insoluble content>

A water dispersion of a water-insoluble polymer was dried in an environment of 50% humidity and 23°C to 25°C

to produce a film of 3 ± 0.3 mm in thickness. Next, the produced film was cut up into 5 mm squares to prepare film pieces. Approximately 1 g of these film pieces were precisely weighed, and the weight of the precisely weighed film pieces was taken to be $W_A$. The precisely weighed film pieces were then immersed in 100 g of an organic solvent (temperature: 25°C) for 24 hours. After 24 hours of immersion, the film pieces were pulled out of the organic solvent, the pulled-out film pieces were vacuum dried at 105°C for 3 hours, and the weight (weight of insoluble content) $W_B$ thereof was precisely weighed. The amount (%) of organic solvent-insoluble content was calculated by the following formula.

$$\text{Amount of organic solvent-insoluble content (\%)} = (W_B/W_A) \times 100$$

Based on the result, it was determined whether or not the water-insoluble polymer was soluble in the organic solvent. Water-insoluble polymers (polymers A to E) that were used in the examples and comparative examples in the present application were each soluble in toluene.

<$F_{sup}$>

The total mass (charged amount) of a water-insoluble polymer used in production of a slurry composition was measured in advance, and this total mass was taken to be $W_0$. The produced slurry composition was left to settle at 25°C for 1 hour. After settling, the supernatant was separated by decantation, and then 100 parts of methanol was added per 100 parts of the separated supernatant so as to cause coagulation. Operations of adding 100 parts of water per 10 parts of coagulated material obtained in this manner, performing stirring, and disposing of the water were repeated twice so as to water wash the coagulated material. The water-washed coagulated material was subsequently left in a 60°C constant-temperature dryer for 1 hour so as to dry the coagulated material and obtain dried material. The mass of the dried material was measured, and this mass was taken to be $W_1$. $F_{sup}$ was then calculated by the following formula (1).

$$F_{sup} = 100 \times (W_1/W_0)\ [\text{mass\%}] \cdots (1)$$

<Dusting>

A functional layer-equipped separator produced in each example or comparative example was cut to 5 cm-square by a knife for a subsequently described Gurley test. During this cutting, a visual inspection was made as to whether shedding of functional particles from an edge part was observed. An evaluation was made by the following standard.

A: Shedding of functional particles from edge part not observed
B: Shedding of functional particles from edge part observed

<Gurley value>

The Gurley value (sec/100 cc) of a functional layer-equipped separator produced in each example or comparative example was measured using a Gurley meter (SMOOTH & POROSITY METER (measurement diameter: ∅2.9 cm) produced by Kumagai Riki Kogyo Co., Ltd.). A smaller Gurley value indicates that the functional layer-equipped separator has better ion permeability and that excellent battery characteristics are more easily ensured.

<IV resistance>

A lithium ion secondary battery was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, the lithium ion secondary battery was CC-CV charged (upper limit cell voltage: 4.35 V) by a 0.2C constant-current method and CC discharged to 3.00 V by a 0.2C constant-current method. This charging and discharging at 0.2C was repeated three times. Thereafter, the lithium ion secondary battery was subjected to an operation of charging to a state of charge (SOC) of 50% at 0.2C in a 25°C environment. The lithium ion secondary battery was then left at rest for 600 seconds. The voltage at the $600^{th}$ second was taken to be $V_0$. Thereafter, 10 seconds of discharging was performed by a 0.5C (= $I_{0.5}$) constant-current method, and the voltage at the $10^{th}$ second was taken to

be $V_{0.5}$. Charging was then performed by a 0.2C constant-current method for the amount of electricity discharged directly beforehand. Next, 10 seconds of discharging was performed by a 1.0C (= $I_{1.0}$) constant-current method, and the voltage at the 10th second was taken to be $V_{1.0}$. Charging was then performed by a 0.2C constant-current method for the amount of electricity discharged directly beforehand. Next, 10 seconds of discharging was performed by a 1.5C (= $I_{1.5}$) constant-current method, and the voltage at the 10th second was taken to be $V_{1.5}$. ($I_{0.5}$,$V_{0.5}$), ($I_{1.0}$,$V_{1.0}$), and ($I_{1.5}$,$V_{1.5}$) were plotted on an XY graph, the gradient b of a regression line was determined by the following formula, and this gradient b was taken to be DCR (direct current resistance).

[Math. 1]

$$b = \frac{\sum (x-\bar{x})(y-\bar{y})}{\sum (x-\bar{x})^2}$$

A DCR relative value was calculated for each example by taking the DCR in Example 1 to be 100 and was evaluated by the following standard. A smaller DCR relative value indicates that the lithium ion secondary battery has lower IV resistance and has reduced internal resistance.

A: DCR relative value of 103 or less
B: DCR relative value of more than 103 and not more than 105
C: DCR relative value of more than 105

inhibition of heat generation in event of internal short circuit (forced internal short circuit test)>

A lithium ion secondary battery of each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, the lithium ion secondary battery was CC-CV charged (upper limit cell voltage: 4.35 V) by a 0.2C constant-current method and CC discharged to 3.00 V by a 0.2C constant-current method. This charging and discharging at 0.2C was repeated three times. The lithium ion secondary battery was subsequently charged to 4.35 V (cut-off condition: 0.02C) by a constant-voltage constant-current (CC-CV) method at a charge rate of 0.2C in a 25°C atmosphere. Thereafter, an iron nail of 3 mm in diameter and 10 cm in length was caused to pierce the lithium ion secondary battery at an approximately central location at a speed of 5 m/min so as to cause a forced short circuit. A forced short circuit was performed for each of five lithium ion secondary batteries (test subjects) prepared by the same operations, and an evaluation was made by the following standard based on the number of test subjects in which rupturing and ignition did not occur. A larger number of test subjects in which rupturing and ignition do not occur indicates that the lithium ion secondary battery has better inhibition of heat generation in the event of an internal short circuit.

A: Number of test subjects in which rupturing and ignition do not occur is 4 or 5
B: Number of test subjects in which rupturing and ignition do not occur is 3
C: Number of test subjects in which rupturing and ignition do not occur is 2 or less

(Example 1)

<Production of slurry composition for non-aqueous secondary battery functional layer>

A composition containing 100 parts of melamine cyanurate A (volume-average particle diameter: 300 nm; thermal decomposition temperature: 350°C; amount of foaming at 400°C: 80 $cm^3/g$ (converted for 25°C and 1 atm)) as foaming agent particles, 4 parts (in terms of solid content) of carboxymethyl cellulose aqueous solution (thermal decomposition temperature: 180°C) as a water-soluble polymer, and 0.5 parts (in terms of solid content) of a polymer A (produced by Asahi Kasei Corporation; product name: Tuftec® M1911 (Tuftec is a registered trademark in Japan, other countries, or both); hydrogenated product of conjugated diene polymer (maleic acid-modified styrene-ethylene/butylene-styrene block copolymer); toluene solution of 10% in solid content concentration) as a water-insoluble polymer was subjected to dispersing treatment to obtain a dispersion liquid. One hour of thermal decompression treatment (bath temperature:

80°C; degree of decompression: 150 Torr) was performed in a rotary evaporator to remove toluene from the dispersion liquid, and then 1.5 parts of NOPTECHS ED052 (produced by San Nopco Limited) was added as a wetting agent and was stirred therewith for 30 minutes by a Three-One Motor to produce a slurry composition. Note that the solid content concentration of the slurry composition was 11.4%. Moreover, $W_0$ and $W_1$ were determined for this slurry composition, and $F_{sup}$ was calculated. The result is shown in Table 1.

<Production of functional layer-equipped separator>

A separator substrate made of a single layer of polypropylene (produced by Celgard, LLC.; product name: #2500) was prepared. The slurry composition obtained as described above was applied onto the separator substrate using a bar coater. After application, drying was performed at a temperature of 50°C in a safety oven to obtain a separator including a functional layer (functional layer thickness: 3 μm) at one side of the separator substrate.

The dusting and Gurley value were evaluated for this functional layer-equipped separator. The results are shown in Table 1.

<Production of negative electrode>

A 5 MPa pressure-resistant vessel equipped with a stirrer was charged with 63 parts of styrene, 34 parts of 1,3-butadiene, 2 parts of itaconic acid, 1 part of 2-hydroxyethyl acrylate, 0.3 parts of t-dodecyl mercaptan as a molecular weight modifier, 5 parts of sodium dodecylbenzenesulfonate as an emulsifier, 150 parts of deionized water, and 1 part of potassium persulfate as a polymerization initiator. These materials were thoroughly stirred and were then heated to a temperature of 55°C to initiate polymerization. At the point at which monomer consumption reached 95.0%, cooling was performed to quench the reaction. A water dispersion containing a polymer that was obtained in this manner was adjusted to pH 8 through addition of 5% sodium hydroxide aqueous solution. Unreacted monomer was subsequently removed through thermal-vacuum distillation. Thereafter, cooling was performed to a temperature of 30°C or lower to yield a water dispersion (binder composition for a negative electrode) containing a binder for a negative electrode.

A planetary mixer was charged with 48.75 parts of artificial graphite (theoretical capacity: 360 mAh/g) and 48.75 parts of natural graphite (theoretical capacity: 360 mAh/g) as negative electrode active materials and 1 part in terms of solid content of carboxymethyl cellulose. These materials were diluted to a solid content concentration of 60% with deionized water and were then kneaded at a rotation speed of 45 rpm for 60 minutes. Thereafter, 1.5 parts in terms of solid content of the binder composition for a negative electrode obtained as described above was added and was kneaded therewith at a rotation speed of 40 rpm for 40 minutes. The viscosity was adjusted to 3,000 ± 500 mPa·s (measured by B-type viscometer at 25°C and 60 rpm) through addition of deionized water to produce a slurry composition for a negative electrode.

The slurry composition for a negative electrode was applied onto the surface of copper foil of 15 μm in thickness serving as a current collector by a comma coater such as to have a coating weight of 11 ± 0.5 mg/cm$^2$. The copper foil with the slurry composition for a negative electrode applied thereon was subsequently conveyed inside an oven having a temperature of 80°C for 2 minutes and an oven having a temperature of 110°C for 2 minutes at a speed of 400 mm/min so as to dry the slurry composition for a negative electrode on the copper foil and thereby obtain a negative electrode web having a negative electrode mixed material layer formed on the current collector. Thereafter, the negative electrode mixed material layer-side of the produced negative electrode web was roll pressed with a line pressure of 11 t (tons) in an environment having a temperature of 25 ± 3°C to obtain a negative electrode having a negative electrode mixed material layer density of 1.60 g/cm$^3$.

<Production of positive electrode>

A planetary mixer was charged with 96.0 parts of NMC811 ($LiNi_{0.8}Mn_{0.1}Co_{0.1}O_2$) as a positive electrode active material, 2.0 parts in terms of solid content of carbon black (produced by Denka Company Limited; product name: Li-100) as a conductive material, and 2.0 parts of polyvinylidene fluoride (produced by Solvay; product name: Solef® 5130 (Solef is a registered trademark in Japan, other countries, or both)), and these materials were mixed. In addition, N-methylpyrrolidone (NMP) was gradually added, and stirred mixing was performed at a temperature of 25 ± 3°C and a rotation speed of 60 rpm to obtain a slurry composition for a positive electrode having a viscosity of 3,600 mPa·s (measured by B-type viscometer at 25 ± 3°C and 60 rpm (M4 rotor)).

The slurry composition for a positive electrode was applied onto aluminum foil of 20 μm in thickness serving as a current collector by a comma coater such as to have a coating weight of 10 ± 0.5 mg/cm$^2$. The aluminum foil was conveyed inside an oven having a temperature of 90°C for 2 minutes and an oven having a temperature of 120°C for 2 minutes at a speed of 0.5 m/min so as to dry the slurry composition for a positive electrode on the aluminum foil and thereby obtain a positive electrode web (lower layer) having a positive electrode mixed material layer formed on the

current collector. Thereafter, the positive electrode mixed material layer-side of the produced positive electrode web was roll pressed with a load of 14 t (tons) in an environment having a temperature of 25 ± 3°C to obtain a positive electrode having a positive electrode mixed material layer density of 3.80 g/cm$^3$ and a positive electrode mixed material layer thickness of 53 μm.

<Production of secondary battery>

The obtained negative electrode, positive electrode, and separator were used to produce a stacked laminate cell (initial design discharge capacity equivalent to 3 Ah). During cell production, the functional layer of the separator was arranged facing the positive electrode. The obtained laminate was arranged inside of aluminum packing and was subjected to vacuum drying under conditions of 60°C and 10 hours. Thereafter, a $LiPF_6$ solution of 1.0 M in concentration (solvent: mixed solvent of ethylene carbonate (EC)/diethyl carbonate (DEC) = 3/7 (volume ratio); additive: containing 2 volume% (solvent ratio) of vinylene carbonate) was loaded as an electrolyte solution. The aluminum packing was then closed by heat sealing at a temperature of 150°C to tightly seal an opening of the aluminum packing, and thereby produce a lithium ion secondary battery.

IV resistance and inhibition of heat generation in the event of an internal short circuit were evaluated for this lithium ion secondary battery. The results are shown in Table 1.

(Example 2)

A slurry composition for a non-aqueous secondary battery functional layer, a functional layer-equipped separator, a negative electrode, a positive electrode, and a secondary battery were prepared or produced in the same way as in Example 1 with the exception that 0.6 parts (in terms of solid content) of a polymer B (produced by Zeon Corporation; product name: Quintac® 3520 (Quintac is a registered trademark in Japan, other countries, or both); hydrogenated product of conjugated diene polymer (styrene-isoprene-styrene block copolymer)) was used instead of 0.5 parts (in terms of solid content) of the polymer A as a water-insoluble polymer in production of the slurry composition for a non-aqueous secondary battery functional layer. Evaluations were conducted in the same manner as in Example 1. The results are shown in Table 1.

(Example 3)

A functional layer-equipped separator, a negative electrode, a positive electrode, and a secondary battery were prepared or produced in the same way as in Example 1 with the exception that a slurry composition for a non-aqueous secondary battery functional layer produced as described below was used. Evaluations were conducted in the same manner as in Example 1. The results are shown in Table 1.

<Production of slurry composition for non-aqueous secondary battery functional layer>

A composition containing 100 parts of melamine cyanurate B (volume-average particle diameter: 400 nm; thermal decomposition temperature: 350°C; amount of foaming at 400°C: 80 cm$^3$/g (converted for 25°C and 1 atm)) as foaming agent particles, 4 parts (in terms of solid content) of carboxymethyl cellulose aqueous solution as a water-soluble polymer, and 5 parts (in terms of solid content) of the polymer A (toluene solution of 10% in solid content concentration) as a water-insoluble polymer was subjected to dispersing treatment to obtain a dispersion liquid. One hour of thermal decompression treatment (bath temperature: 80°C; degree of decompression: 150 Torr) was performed in a rotary evaporator to remove toluene from the dispersion liquid, and then 1.5 parts of NOPTECHS ED052 (produced by San Nopco Limited) was added as a wetting agent and was stirred therewith for 30 minutes by a Three-One Motor to produce a slurry composition.

(Example 4)

A functional layer-equipped separator, a negative electrode, a positive electrode, and a secondary battery were prepared or produced in the same way as in Example 1 with the exception that a slurry composition for a non-aqueous secondary battery functional layer produced as described below was used. Evaluations were conducted in the same manner as in Example 1. The results are shown in Table 1.

<Production of slurry composition for non-aqueous secondary battery functional layer>

With respect to a system obtained by loading 10 parts of melamine cyanurate A as foaming agent particles

and 10 parts of toluene into a glass vessel and mixing these materials, 0.05 parts (in terms of solid content) of a polymer C (produced by Kraton Corporation; product name: Kraton G1657; hydrogenated product of conjugated diene polymer (styrene-ethylene/butylene-styrene block copolymer); toluene solution of 10% in solid content concentration) was added as a water-insoluble polymer, and dispersing treatment was performed to obtain a preliminary dispersion liquid. A dispersion liquid was then obtained by adding 100 parts of deionized water and 0.4 parts (in terms of solid content) of carboxymethyl cellulose aqueous solution as a water-soluble polymer to the preliminary dispersion liquid. One hour of thermal decompression treatment (bath temperature: 80°C; degree of decompression: 150 Torr) was performed in a rotary evaporator to remove toluene from the dispersion liquid, and then 0.15 parts of NOPTECHS ED052 (produced by San Nopco Limited) was added as a wetting agent and was stirred therewith for 30 minutes by a Three-One Motor to produce a slurry composition.

(Example 5)

A functional layer-equipped separator, a negative electrode, a positive electrode, and a secondary battery were prepared or produced in the same way as in Example 1 with the exception that a slurry composition for a non-aqueous secondary battery functional layer produced as described below was used. Evaluations were conducted in the same manner as in Example 1. The results are shown in Table 1.

<Production of slurry composition for non-aqueous secondary battery functional layer>

A composition containing fine powder melamine (volume-average particle diameter: 800 nm; thermal decomposition temperature: 300°C; amount of foaming at 400°C: 100 $cm^3/g$ (converted for 25°C and 1 atm)) as foaming agent particles, 7 parts (in terms of solid content) of carboxymethyl cellulose aqueous solution as a water-soluble polymer, and 10 parts (in terms of solid content) of the polymer A (toluene solution of 10% in solid content concentration) as a water-insoluble polymer was subjected to dispersing treatment to obtain a dispersion liquid. One hour of thermal decompression treatment (bath temperature: 80°C; degree of decompression: 150 Torr) was performed in a rotary evaporator to remove toluene from the dispersion liquid, and then 1.5 parts of NOPTECHS ED052 (produced by San Nopco Limited) was added as a wetting agent and was stirred therewith for 30 minutes by a Three-One Motor to produce a slurry composition.

(Example 6)

A functional layer-equipped separator, a negative electrode, a positive electrode, and a secondary battery were prepared or produced in the same way as in Example 1 with the exception that a slurry composition for a non-aqueous secondary battery functional layer produced as described below was used. Evaluations were conducted in the same manner as in Example 1. The results are shown in Table 1.

<Production of slurry composition for non-aqueous secondary battery functional layer>

A composition containing 100 parts of fine powder melamine as foaming agent particles, 8 parts (in terms of solid content) of sodium alginate aqueous solution (thermal decomposition temperature: 180°C or higher) as a water-soluble polymer, and 0.7 parts (in terms of solid content) of a polymer D (produced by Kuraray Co., Ltd.; product name: SEPTON® HG252 (SEPTON is a registered trademark in Japan, other countries, or both); hydrogenated product of conjugated diene polymer (hydroxyl group-containing styrene-ethylene/ethylene/propylene-styrene block copolymer); toluene solution of 10% in solid content concentration) as a water-insoluble polymer was subjected to dispersing treatment to obtain a dispersion liquid. One hour of thermal decompression treatment (bath temperature: 80°C; degree of decompression: 150 Torr) was performed in a rotary evaporator to remove toluene from the dispersion liquid, and then 1.5 parts of NOPTECHS ED052 (produced by San Nopco Limited) was added as a wetting agent and was stirred therewith for 30 minutes by a Three-One Motor to produce a slurry composition.

(Comparative Example 1)

A functional layer-equipped separator, a negative electrode, a positive electrode, and a secondary battery were prepared or produced in the same way as in Example 1 with the exception that a slurry composition for a non-aqueous secondary battery functional layer produced as described below was used. Evaluations were conducted in the same manner as in Example 1. The results are shown in Table 1.

<Production of water-insoluble polymer (polymer E)>

A reactor including a stirrer was supplied with 70 parts of deionized water and 0.5 parts of ammonium persulfate. The gas phase was purged with nitrogen gas and the temperature was raised to 60°C. Meanwhile, a monomer composition was obtained in a separate vessel by mixing 50 parts of deionized water, 0.5 parts of polyoxyethylene lauryl ether (produced by Kao Corporation; product name: EMULGEN® 120 (EMULGEN is a registered trademark in Japan, other countries, or both)) as an emulsifier, 65 parts of 2-ethylhexyl acrylate as a (meth)acrylic acid alkyl ester monomer (ester group-containing monomer), 30 parts of styrene as an aromatic monovinyl monomer, 1.7 parts of allyl glycidyl ether as an epoxy group-containing monomer, 0.3 parts of allyl methacrylate as a cross-linkable monomer, and 3 parts of acrylic acid as a carboxy group-containing monomer.

This monomer composition was continuously added into the reactor over 4 hours to perform polymerization. The reaction was carried out at 70°C during the addition. Once the continuous addition was complete, a further 3 hours of stirring was performed at 80°C, and then the reaction was ended to yield a water dispersion of a polymer E (acrylic polymer) as a water-insoluble polymer.

The obtained water dispersion of the polymer E was cooled to 25°C, was subsequently adjusted to pH 8.0 through addition of sodium hydroxide aqueous solution, and then unreacted monomer was removed through introduction of steam. Thereafter, filtration was performed using a 200-mesh (opening size: approximately 77 μm) stainless steel screen while adjusting the solid content concentration with deionized water to obtain a water dispersion (solid content concentration: 40%) of the polymer E. Note that the glass-transition temperature of the polymer E was measured and was determined to be -25°C.

<Production of slurry composition for non-aqueous secondary battery functional layer>

A composition containing 100 parts of melamine cyanurate A as foaming agent particles, 4 parts (in terms of solid content) of carboxymethyl cellulose aqueous solution as a water-soluble polymer, and 2.5 parts (in terms of solid content) of the polymer E obtained as described above (water dispersion of 40% in solid content concentration) as a water-insoluble polymer was subjected to dispersing treatment, and then 1.5 parts of NOPTECHS ED052 (produced by San Nopco Limited) was added as a wetting agent and was stirred therewith for 30 minutes by a Three-One Motor to produce a slurry composition.

(Comparative Example 2)

A functional layer-equipped separator, a negative electrode, a positive electrode, and a secondary battery were prepared or produced in the same way as in Example 1 with the exception that a slurry composition for a non-aqueous secondary battery functional layer produced as described below was used. Evaluations were conducted in the same manner as in Example 1. The results are shown in Table 1.

<Production of slurry composition for non-aqueous secondary battery functional layer>

A composition containing 100 parts of fine powder melamine as foaming agent particles, 4 parts (in terms of solid content) of carboxymethyl cellulose aqueous solution as a water-soluble polymer, and 30 parts (in terms of solid content) of the polymer A (toluene solution of 10% in solid content concentration) as a water-insoluble polymer was subjected to dispersing treatment to obtain a dispersion liquid. One hour of thermal decompression treatment (bath temperature: 80°C; degree of decompression: 150 Torr) was performed in a rotary evaporator to remove toluene from the dispersion liquid, and then 1.5 parts of NOPTECHS ED052 (produced by San Nopco Limited) was added as a wetting agent and was stirred therewith for 30 minutes by a Three-One Motor to produce a slurry composition.

(Comparative Example 3)

A slurry composition for a non-aqueous secondary battery functional layer, a functional layer-equipped separator, a negative electrode, and a positive electrode were prepared or produced in the same way as in Example 1 with the exception that a water-insoluble polymer was not added in production of the slurry composition for a non-aqueous secondary battery functional layer. Evaluations were conducted in the same manner as in Example 1. The results are shown in Table 1. Note that evaluation of the Gurley value of the functional layer-equipped separator was not performed. Evaluations of IV resistance and inhibition of heat generation in the event of an internal short circuit of a secondary battery were also not performed because there was significant dusting and an operation of assembling a secondary battery could not be performed.

(Comparative Example 4)

A slurry composition for a non-aqueous secondary battery functional layer, a functional layer-equipped separator, a negative electrode, a positive electrode, and a secondary battery were prepared or produced in the same way as in Comparative Example 1 with the exception that the amount of the water-insoluble polymer (polymer E) was changed from 2.5 parts to 20 parts (in terms of solid content) in production of the slurry composition for a non-aqueous secondary battery functional layer. Evaluations were conducted in the same manner as in Example 1. The results are shown in Table 1.

Note that in Table 1, shown below:

"Amount of foaming" indicates amount of foaming (converted for 25°C and 1 atm) of foaming agent particles at 400°C;
"$F_{sup}$" indicates value calculated by following formula (1):

$$F_{sup} = 100 \times (W_1/W_0)\ [\text{mass\%}] \cdots (1)$$

given that $W_0$ (g) is total mass of water-insoluble polymer contained in slurry composition and $W_1$ (g) is mass of dried material obtained when supernatant obtained through 1 hour of settling of slurry composition at temperature of 25°C is caused to coagulate using methanol and then resultant coagulated material is water washed and subsequently dried at temperature of 60°C for 1 hour;
"Water-insoluble polymer/Water-soluble polymer (mass ratio)" indicates mass ratio of content of water-insoluble polymer relative to content of water-soluble polymer in slurry composition;
"MC" indicates melamine cyanurate;
"MM" indicates melamine;
"CMC" indicates carboxymethyl cellulose;
"SA" indicates sodium alginate;
"< 25" indicates lower than 25°C; and
"≥ 180" indicates 180°C or higher.

Also note that "Water-insoluble polymer/Water-soluble polymer (mass ratio)" in Table 1 is a value that is calculated from charged amounts of the water-soluble polymer and the water-insoluble polymer and that is rounded and displayed to three significant figures.

[Table 1]

| | | | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|---|---|
| Slurry composition for functional layer | Functional particles | Foaming agent particles | Type | MC | MC | MC | MC | MM | MM | MC | MM | MC | MC |
| | | | Thermal decomposition temperature [°C] | 350 | 350 | 350 | 350 | 300 | 300 | 350 | 300 | 350 | 350 |
| | | | Volume-average particle diameter [nm] | 300 | 300 | 400 | 300 | 800 | 800 | 300 | 800 | 300 | 300 |
| | | | Amount of foaming [$cm^3/g$] | 80 | 80 | 80 | 80 | 100 | 100 | 80 | 100 | 80 | 80 |
| | | | Amount [parts by mass] | 100 | 100 | 100 | 100 | 100 | 100 | 100 | 100 | 100 | 100 |
| | Water-insoluble polymer | Type | | Polymer A | Polymer B | Polymer A | Polymer C | Polymer A | Polymer D | Polymer E | Polymer A | - | Polymer E |
| | | Glass-transition temperature [°C] | | <25 | < 25 | < 25 | < 25 | < 25 | < 25 | -25 | < 25 | - | -25 |
| | | Amount [parts by mass] | | 0.5 | 0.6 | 5 | 0.5 | 10 | 0.7 | 2.5 | 30 | - | 20 |
| | Water-soluble polymer | Type | | CMC | CMC | CMC | CMC | CMC | SA | CMC | CMC | CMC | CMC |
| | | Thermal decomposition temperature [°C] | | 180 | 180 | 180 | 180 | 180 | ≥ 180 | 180 | 180 | 180 | 180 |
| | | Amount [parts by mass] | | 4 | 4 | 4 | 4 | 7 | 8 | 4 | 4 | 4 | 4 |
| | Water-insoluble polymer/Water-soluble polymer (mass ratio) | | | 0.125 | 0.150 | 1.25 | 0.125 | 1.43 | 0.0875 | 0.625 | 7.50 | 0 | 5.00 |
| | $F_{sup}$ [mass%] | | | 0 | 2 | 0 | 0 | 5 | 0 | 92 | 2 | - | 88 |

(continued)

| | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| Evaluation | Dusting | A | A | A | A | A | A | A | A | B | A |
| | Gurley value [sec/100 cc] | 158 | 149 | 177 | 160 | 139 | 149 | 250 | 212 | - | 360 |
| | IV resistance | A | A | A | A | A | A | B | C | - | C |
| | Heat generation in event of internal short circuit | A | B | A | B | B | B | C | A | - | A |

It can be seen from Table 1 that it was possible to form a secondary battery having excellent inhibition of heat generation in the event of an internal short circuit and reduced internal resistance in Examples 1 to 6 in which the used slurry composition contained foaming agent particles, a water-insoluble polymer, a water-soluble polymer, and water, had quantitative ratios of the water-insoluble polymer and the water-soluble polymer relative to the functional particles that were within specific ranges, and that had a value for $F_{sup}$ that was not more than a specific value.

In contrast, it can be seen that inhibition of heat generation in the event of an internal short circuit of a secondary battery decreased and internal resistance of the secondary battery increased in Comparative Example 1 in which the used slurry composition had a value for $F_{sup}$ that was larger than a specific value.

It can also be seen that internal resistance of a secondary battery increased in Comparative Example 2 in which the used slurry composition had a quantitative ratio of a water-insoluble polymer relative to functional particles that was outside of a specific range.

It can also be seen that shedding of functional particles from a functional layer formed on a separator substrate occurred in Comparative Example 3 in which the used slurry composition did not contain a water-insoluble polymer.

It can also be seen that internal resistance of a secondary battery increased in Comparative Example 4 in which the used slurry composition had a value for $F_{sup}$ that was larger than a specific value.

INDUSTRIAL APPLICABILITY

According to the present disclosure, it is possible to provide a slurry composition for a non-aqueous secondary battery functional layer that is capable of forming a functional layer that can inhibit heat generation in the event of an internal short circuit of a non-aqueous secondary battery and can also reduce internal resistance of the non-aqueous secondary battery, and also to provide a method of producing this slurry composition for a non-aqueous secondary battery functional layer.

## Claims

1. A slurry composition for a non-aqueous secondary battery functional layer comprising functional particles, a water-insoluble polymer, a water-soluble polymer, and water, wherein

   the functional particles include foaming agent particles,
   content of the water-insoluble polymer is not less than 0.01 parts by mass and not more than 20 parts by mass per 100 parts by mass of the functional particles,
   content of the water-soluble polymer is not less than 1 part by mass and not more than 10 parts by mass per 100 parts by mass of the functional particles, and
   a value $F_{sup}$ calculated by formula (1), shown below,

$$F_{sup} = 100 \times (W_1/W_0)\ [\text{mass\%}] \cdots (1)$$

   is 10 mass% or less, given that $W_0$ (g) is total mass of the water-insoluble polymer contained in the slurry composition for a non-aqueous secondary battery functional layer and $W_1$ (g) is mass of dried material obtained when a supernatant obtained through 1 hour of settling of the slurry composition for a non-aqueous secondary battery functional layer at a temperature of 25°C is caused to coagulate using methanol and then resultant coagulated material is water washed and subsequently dried at a temperature of 60°C for 1 hour.

2. The slurry composition for a non-aqueous secondary battery functional layer according to claim 1, wherein the content of the water-insoluble polymer is 10 parts by mass or less per 100 parts by mass of the functional particles.

3. The slurry composition for a non-aqueous secondary battery functional layer according to claim 1, wherein the water-soluble polymer has a thermal decomposition temperature of 130°C or higher.

4. The slurry composition for a non-aqueous secondary battery functional layer according to claim 1, wherein the water-soluble polymer is selected from the group consisting of a cellulose derivative, an alginic acid compound, polyvinyl alcohol, and a polyacrylic acid compound.

5. The slurry composition for a non-aqueous secondary battery functional layer according to claim 1, wherein the foaming agent particles have a thermal decomposition temperature of not lower than 150°C and not higher than

450°C.

6. The slurry composition for a non-aqueous secondary battery functional layer according to claim 1, wherein an amount of foaming of the foaming agent particles at 400°C is 10 $cm^3/g$ or more as converted for 25°C and 1 atm.

7. The slurry composition for a non-aqueous secondary battery functional layer according to claim 1, wherein the foaming agent particles are a melamine compound.

8. The slurry composition for a non-aqueous secondary battery functional layer according to claim 7, wherein the melamine compound is melamine cyanurate.

9. A method of producing a slurry composition for a non-aqueous secondary battery functional layer that is a method of producing the slurry composition for a non-aqueous secondary battery functional layer according to any one of claims 1 to 8, comprising removing an organic solvent from a dispersion liquid containing the functional particles, the water-insoluble polymer, the water-soluble polymer, water, and the organic solvent.

10. The method of producing a slurry composition for a non-aqueous secondary battery functional layer according to claim 9, further comprising, prior to the removing, either of the following (A) or (B):

(A) performing dispersing treatment of a composition containing the functional particles, the water-insoluble polymer, the water-soluble polymer, water, and the organic solvent to obtain the dispersion liquid;
(B) performing dispersing treatment of a composition containing the functional particles, the water-insoluble polymer, and the organic solvent to obtain a preliminary dispersion liquid and adding the water-soluble polymer and water to the preliminary dispersion liquid to obtain the dispersion liquid.

**INTERNATIONAL SEARCH REPORT**

International application No. **PCT/JP2022/045744**

**A. CLASSIFICATION OF SUBJECT MATTER**

***H01M 50/403***(2021.01)i; ***H01M 50/414***(2021.01)i; ***H01M 50/42***(2021.01)i; ***H01M 50/429***(2021.01)i; ***H01M 50/443***(2021.01)i; ***H01M 50/449***(2021.01)i
FI: H01M50/403 D; H01M50/414; H01M50/42; H01M50/429; H01M50/443 Z; H01M50/449

According to International Patent Classification (IPC) or to both national classification and IPC

**B. FIELDS SEARCHED**

Minimum documentation searched (classification system followed by classification symbols)

H01M50/403; H01M50/414; H01M50/42; H01M50/429; H01M50/443; H01M50/449

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-187891 A (KEIWA INC.) 20 July 2006 (2006-07-20) | 1-10 |
| A | JP 2019-46733 A (TOYOTA MOTOR CORP.) 22 March 2019 (2019-03-22) | 1-10 |
| A | WO 2021/131256 A1 (PANASONIC INTELLECTUAL PROPERTY MANAGEMENT CO., LTD.) 01 July 2021 (2021-07-01) | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 January 2023** | **24 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/045744**

| Patent document cited in search report | Publication date (day/month/year) | Patent family member(s) | Publication date (day/month/year) |
|---|---|---|---|
| JP 2006-187891 A | 20 July 2006 | (Family: none) | |
| JP 2019-46733 A | 22 March 2019 | (Family: none) | |
| WO 2021/131256 A1 | 01 July 2021 | EP 4084204 A1<br>CN 114846692 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020040163 A1